# EUROPÄISCHE PATENTSCHRIFT

(11) **EP 0 608 527 B1**
(45) Veröffentlichungstag und Bekanntmachung des Hinweises auf die Patenterteilung: **09.10.1996**
(21) Anmeldenummer: 93119931.9
(22) Anmeldetag: 10.12.1993
(51) Int. Cl.: B65D 51/00, B60K 15/05

(54) **Tankverschlusssystem für einen Kraftstoffbehälter eines Kraftfahrzeuges**
Fuel tank closure for a vehicle
Dispositif de fermeture pour réservoir de carburant d'un véhicule automobile

(30) Priorität: 15.12.1992 DE 4242228
(43) Veröffentlichungstag der Anmeldung: 03.08.1994
(73) Patentinhaber: WEBASTO KAROSSERIESYSTEME GmbH, D-82131 Stockdorf (DE)
(72) Erfinder: Färber, Manfred, D-82407 Wielenbach (DE)
(74) Vertreter: Wiese, Gerhard

(56) Entgegenhaltungen:
- FR-A- 1 084 094
- GB-A- 767 020
- US-A- 5 066 062
- US-A- 5 072 986

## Beschreibung

Die Erfindung betrifft ein Tankverschlußsystem für einen Kraftstoffbehälter eines Kraftfahrzeuges gemäß dem Oberbegriff des Patentanspruchs 1.

Aus der US-A 5 066 062 ist ein Tankverschlußsystem bekannt, bei dem ein auf einen Einfüllstutzen mittels eines elektrischen Antriebs auf- und abschraubbarer Tankdeckel gemeinsam mit dem Antrieb und einer in die Seitenwand der Karosserie schwenkbar eingebetteten Tankklappe eine Baueinheit bildet. In den dort gezeigten Varianten ist entweder der Tankdeckel oder die Tankklappe motorisch betätigbar, sodaß der Fahrer beim Betanken immer eines der Teile manuell betätigen muß.

Der vorliegenden Erfindung liegt die Aufgabe zugrunde, ein Tankverschlußsystem mit hohem Bedienkomfort und einer gleichzeitigen diebstahlsicheren Verriegelung zu schaffen.

Diese Aufgabe wird mit den Merkmalen im kennzeichnenden Teil des Patentanspruchs 1 gelöst. Dadurch daß das Öffnen und Schließen mittels eines Antriebsmotors erfolgt, müssen beim Tanken überhaupt keine Teile des Fahrzeuges mehr berührt werden, sondern lediglich die Zapfpistole in den Einfüllstutzen eingeführt und nach Beendigung des Tankvorgangs wieder entfernt werden. Ein weiterer Vorteil des erfindungsgemäßen Tankverschlußsystems besteht darin. daß eine die Einheit bewegende Mechanik beim Verschließen des Einfüllstutzens gleichzeitig einen Verriegelungsmechanismus in Eingriff bringt. Hierdurch wird mittels eines einzigen Antriebes und einer einzigen Mechanik gleichzeitig eine diebstahlsichere Verriegelung des Tankverschlußsystems erreicht.

In einer ersten vorteilhaften Ausführungsform ist die Einheit an einer karosseriefesten Drehachse schwenkbar gelagert. Hierbei erfolgt das Öffnen der Einheit in ähnlicher Weise wie bisher bei einer Tankklappe. Der Betätigungsmechanismus eines solchen Tankverschlußsystems ist besonders einfach.

In einer zweiten vorteilhaften Ausgestaltung ist die Einheit an einem bewegbaren Schlitten schwenkbar gelagert. Hierbei wird die außenliegende Tankklappe beim Öffnungsvorgang zunächst etwas vom Einfüllstutzen abgehoben und anschließend vollständig über den Einfüllstutzen hinweg verfahren. Die Bewegung des Schlittens erfolgt dabei in einer senkrecht zur Achse des Einfüllstutzens liegenden Ebene.

Vorteilhaft ist eine Ausgestaltung der Einheit in Form eines im Querschnitt zweiseitigen Hebels,, wobei von dem karosseriefesten Drehpunkt ausgehend an einem Ende des Hebels ein Betätigunsbolzen und am anderen Ende des Hebels ein Verriegelungsbolzen angeordnet ist. Die dazugehörige Mechanik kann dann aus einem im wesentlichen senkrecht zur Achse des Einfüllstutzens verschiebbaren Riegelgestänge bestehen, das mit einem gabelförmigen Schlitz mit dem Betätigungsbolzen in Eingriff steht und das ferner einen Fanghaken aufweist, der bei geschlossener Einheit den Verriegelungsbolzen umgreift. Diese Ausführungsform ist in ihrem Aufbau einfach und kostengünstig und aufgrund der wenigen bewegten Teile sehr robust in der Handhabung.

Für das Aufbringen eines Anpreßdruckes der Einheit auf den Einfüllstutzen zum dichten Verschließen desselben ist es vorteilhaft, wenn der Fanghaken eine bezüglich der Betätigungsrichtung des Riegelgestänges leicht geneigte Rampe aufweist, die beim Schließvorgang einen sich verstärkenden Druck auf den Riegelbolzen ausübt.

Es ist ferner vorteilhaft, einen im geöffneten Zustand nahe des Einfüllstutzens plazierten Sensor vorzusehen, der nach Detektieren der Beendigung eines Tankvorganges einen Stellimpuls zum zeitverzögernden Schließen der Einheit an den Antriebsmotor abgibt. Als Sensor kann beispielsweise ein optischer Sensor verwendet werden, der auf das Entfernen der Zapfpistole anspricht. Mittels eines solchen automatisch schließenden Systems ist eine besonders große Sicherheit dafür gegeben, daß das Tankverschlußsystem abgesehen von den Betankungsvorgängen immer geschlossen ist.

Zwei Ausführungsbeispiele der Erfindung sind nachfolgend anhand der Zeichnung beschrieben. Es zeigt
- Fig. 1: ein Tankverschlußsystem mit einer karosseriefesten Schwenkachse im geschlossenen Zustand,
- Fig. 2: ein System entsprechend Fig. 1 im geöffneten Zustand,
- Fig. 3 - 5: ein Tankverschlußsystem mit einer auf einem verschiebbaren Schlitten gelagerten Schwenkachse im geschlossenen, im teilweise geöffneten und im vollständig geöffneten Zustand.

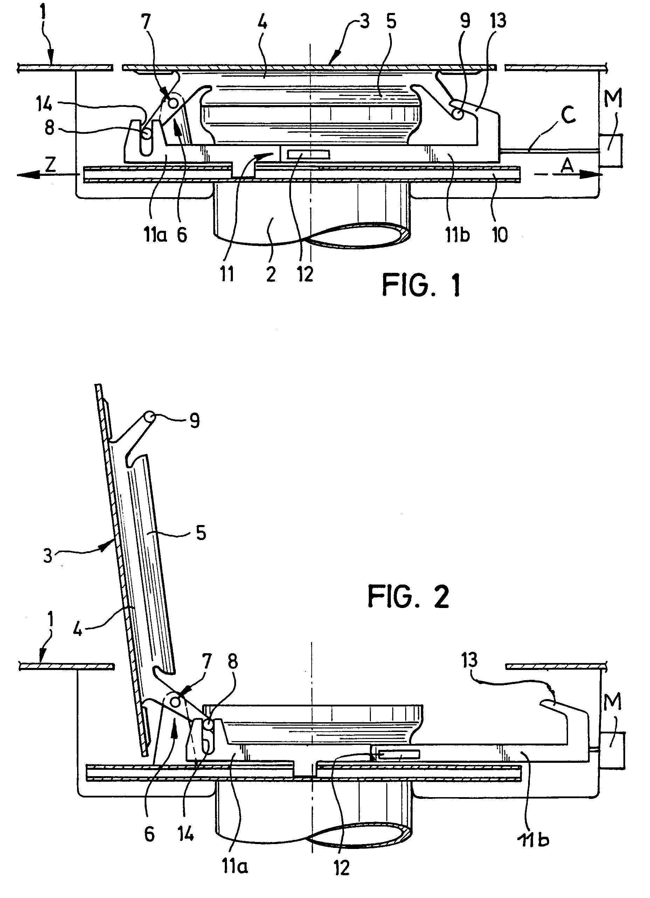

In Fig. 1 ist mit 1 die ansonsten nicht näher gezeigte Fahrzeugseitenwand eines Kraftfahrzeuges bezeichnet. Diese weist - wie üblich - eine Aussparung auf, in der ein Einfüllstutzen 2 eines ansonsten nicht gezeigten Kraftstoffbehälters ausmündet. Die Aussparung in der Fahrzeugseitenwand 1 wird durch eine insgesamt mit 3 bezeichnete Einheit aus einer außenliegenden Tankklappe 4 und einem unmittelbar damit verbundenen Verschlußteil 5 abgedeckt. Im geschlossenen Zustand ist die Tankklappe 4 in einer bündigen Lage mit der Fahrzeugseitenwand 1 und das Verschlußteil 5 schließt dichtend den Einfüllstutzen 2 ab. Das Verschlußteil 5 übernimmt insofern die Funktion eines herkömmlichen Tankdeckels.

Die Einheit 3 weist auf ihrer Innenseite zu beiden Seiten des Verschlußteils 5 zwei nicht näher bezeichnete zungenartige Vorsprünge auf, an derem einen die Einheit 3 mittels einer Drehachse 7 an einem karosseriefesten Scharnier 6 schwenkbar angelenkt ist. Am Ende desselben zungenartigen Vorsprunges ist ein Betätigunsbolzen 8 angeordnet. Der andere zungenartige Vorsprung trägt an seinem Ende einen Verriegelungsbolzen 9.

Oberhalb und unterhalb des Einfüllstutzens 2 sind am Grunde der Aussparung zwei Führungen 10 angeordnet, längs denen ein insgesamt mit 11 bezeichnetes Riegelgestänge mittels eines nicht gezeigten Antriebsmotors verfahrbar ist. Das Riegelgestänge besteht aus zwei sich überlappenden Teilen 11a und 11b, die mittels eines senkrecht zur Zeichenebene bewegbaren Riegelsteines 12 miteinander kuppelbar sind. Das in der Fig. 1 links liegende Antriebsteil 11a des Riegelgestänges ist längs der Führungen 10 in einer Ebene senkrecht zur Achse des Einfüllstutzens 2 verschiebbar. Das Antriebsteil 11a weist einen senkrecht zu dessen Betätigunsrichtung verlaufenden Schlitz 14 auf, der den Betätigungsbolzen 8 umgreift und bei einer Verschiebung des Antriebsteils 11a mitnimmt. Die Länge des Schlitzes 14 ist dabei so gewählt, daß die aufgrund der Schwenkung des Betätigungsbolzens 8 um die Drehachse 7 erfolgende Bewegung in Richtung der Achse des Einfüllstutzens 2 ausgeglichen werden kann.

Das in der Zeichnung rechts liegende Riegelteil 11b des Riegelgestänges 11 ist mit einem durch den nicht gezeigten Antriebsmotor betätigten Mechanismus, wie beispielsweise einem von Schiebedächern her bekannten druckfest geführten Kabel, verbunden und mittels diesem ebenfalls längs der Führungen 10 verfahrbar. Es weist an seinem Ende einen Fanghaken 13 auf, der im geschlossenen Zustand den Verriegelungsbolzen 9 an der Einheit 3 umgreift und festhält.

Ausgehend von der in Fig. 1 gezeigten geschlossenen Position soll nunmehr die Funktion der Teile des ersten Ausführungsbeispiels bei einem Öffnungsvorgang, das heißt bis zum Erreichen der Position in Fig. 2 beschrieben werden. Durch das nicht gezeigte Antriebskabel wird das Riegelteil 11b in Richtung des Pfeiles A mittels des nicht gezeigten Antriebsmotors in der Fig. 1 nach rechts bewegt. Da der Riegelstein 12 zu Beginn dieser Bewegung das Riegelteil 11b mit dem Antriebsteil 11a noch nicht in Eingriff gebracht hat, bleibt das Antriebsteil 11a zunächst in der in Fig. 1 dargestellten Position. Nachdem der Fanghaken 13 sich mit dem Riegelteil 11b soweit nach rechts bewegt hat, daß der Verriegelungsbolzen 9 freigegeben ist, kuppelt der vorzugsweise federbelastete Riegelstein die beiden Teile 11a und 11b des Riegelgestänges 11 miteinander und nimmt somit auch das Antriebsteil 11a in Richtung des Pfeiles A mit. Der Schlitz 14 am Antriebsteil 11a führt dabei den Betätigungsbolzen 8 in einem Kreisbogen um die Drehachse 7 nach rechts, wodurch sich die Einheit 3 insgesamt um die Drehachse 7 in die in Fig. 2 gezeigte Position nach außen dreht. In der in Fig. 2 gezeigten Endlage beträgt der Schwenkwinkel mehr als 90°, sodaß der nunmehr von der Einheit 3 freigegebene Einfüllstutzen 2 von einer Zapfpistole ungehindert erreicht werden kann.

Beim Schließvorgang laufen die vorstehend beschriebenen Vorgänge in umgekehrter Reihenfolge ab. Dabei werden zunächst beide Teile 11a und 11b des Riegelgestänges 11 in Richtung eines in Fig. 1 mit Z bezeichneten Pfeiles nach links verfahren. Wenn der Schlitz 14 und somit der Betätigungsbolzen 8 die in Fig. 1 gezeigte Lage erreicht haben wird der Riegelstein 12 durch Auflaufen auf eine nicht gezeigte Rampe ausgekuppelt und anschließend das Riegelteil 11b unabhängig vom Antriebsteil 11a weiter nach links verschoben. Durch die bezüglich der Bewegungsrichtung des Riegelgestänges 11 geneigte Rampe am Fanghaken 13 wird bei einer weiteren Bewegung des Riegelteils 11b in Richtung des Pfeiles Z ein steigender Anpreßdruck auf den Verriegelungsbolzen 9 ausgeübt. Hierdurch wird ein sicheres Abdichten des Verschlußteiles 5 am Einfüllstutzen 2 gewährleistet.

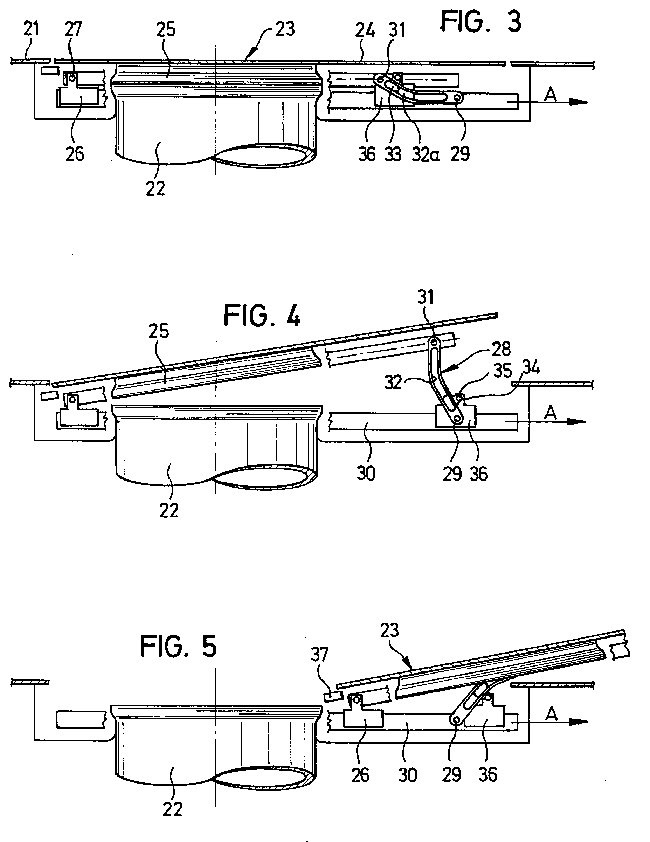

Bei einem zweiten, in den Fig. 3 bis 5 gezeigten Ausführungsbeispiel der Erfindung ist eine Fahrzeugseitenwand mit 21 und ein Einfüllstutzen eines nicht näher bezeichneten Kraftstoffbehälters mit 22 bezeichnet. Eine aus einem Verschlußteil 25 und einer außenliegenden Tankklappe 24 gebildete Einheit 23 ist an ihrer einen Seite mittels einer Drehachse 27 an einem Schlitten 26 schwenkbar gelagert, der längs je einer oberhalb und unterhalb des Einfüllstutzens 22 angeordneten Führung 30 in einer im wesentlichen senkrecht zur Achse des Einfüllstutzens 22 liegenden Ebene verfahrbar ist. Auf der anderen Seite des Einfüllstutzens 22 befindet sich ein Schwenkhebel 28, der mit seinem einen Ende über eine Schwenkachse 29 karosseriefest drehbar gelagert ist. Das andere Ende des Schwenkhebels 28 ist mittels einer Drehachse 31 drehbar an der Innenseite der Einheit 23 angelenkt. Der Schwenkhebel 28 weist ferner eine Kulissenbahn 32 auf. In dieser Kulissenbahn 32 ist ein Gleitstein 33 verschiebbar geführt, der über einen Mitnehmer 34 durch eine Drehachse 35 drehbar an einem Betätigungsschlitten 36 gelagert ist. Der Betätigunsschlitten 36 ist ebenfalls längs der Führung 30 verfahrbar und wird zu diesem Zweck über ein nicht gezeigtes Antriebskabel bzw. Antriebsgestänge von einem ebenfalls nicht gezeigten Antriebsmotor betätigt.

Ausgehend von der in Fig. 3 gezeigten Schließposition erfolgt das Öffnen der Einheit 23 wie folgt. Der Betätigungsschlitten 36 wird mittels des Antriebsmotors längs der Führung 30 in Richtung des Pfeiles A, das heißt in der Zeichnung nach rechts befördert. Der über den Mitnehmer 34 am Betätigungsschlitten 36 angelenkte Gleitstein 33 sorgt dabei unter einer Gleitbewegung in der Kulissenbahn 32 für ein Aufstellen des Schwenkhebels 28 gemäß Fig. 4. Der die Drehachse 27 tragende Schlitten 26 bleibt dabei noch in seiner in Fig. 4 dargestellten Position. Sobald der Betätigunsschlitten 36 an der karosseriefesten Schwenkachse 29 vorbei weiter nach rechts fährt, beginnt sich der Schwenkhebel 28 nach rechts umzulegen und übt dabei eine Zugkraft auf den Schlitten 26 aus. Beim vollständigen Umlegen des Schwenkhebels 28 in die in Fig. 5 dargestellte Position ist der Schlitten 26 vollständig am Einfüllstutzen 22 vorbei nach rechts gefahren, sodaß die Einheit 23 den Einfüllstutzen 22 vollständig freigibt.

Beim Schließvorgang laufen die vorstehend beschriebenen Schritte in umgekehrter Reihenfolge ab. Der Betätigunsschlitten 36 fährt in der Zeichnung nach links und bewirkt über den Gleitstein 33 ein Zurückschwenken des Schwenkhebels 28. Wenn der vordere Schlitten 26 seine Endlage gemäß Fig. 4 erreicht hat, klappt der Schwenkhebel 28 nach links und zieht die Einheit 23 in die in Fig. 3 gezeigte Schließposition. Durch eine Kröpfung des Schwenkhebels 28 weist die Kulissenbahn 32 in dem beim Anfahren der Schließposition vom Gleitstein 33 zuletzt durchlaufenen Bereich 32a eine gegenüber der Bewegungsrichtung der Führung 30 leicht geneigte Bahn auf. Hierdurch drückt der Gleitstein 33 in der letzten Phase seiner Bewegung nach links das Verschlußteil 25 der Einheit 23 fest und dicht gegen den Einfüllstutzen 22.

Mittels der vorstehend beschriebenen Ausführungsbeispiele ist eine einfache, saubere und zuverlässige Betankung eines Kraftfahrzeuges möglich. Der Kernpunkt der Erfindung liegt dabei immer in der Integration von Tankklappe und Tankdeckel, auch wenn der Fachmann für deren Betätigung andere Mittel als die in den Ausführungsbeispielen beschriebenen wählt.

In einer sehr einfachen Varante ist auch eine manuelle Betätigung einer erfindungsgemäßen Einheit aus Tankklappe und Tankdeckel realisierbar. Die Entriegelung erfolgt dabei beispielsweise über einen Bowdenzug vom Innenraum aus, das Verschließen durch einfaches Zudrücken der Tankklappe, wobei eine kompressible Dichtung am Verschlußteil sich dichtend an den Einfüllstutzen anlegt und ein Riegelmechanismus über zwei entgegengesetzt geneigte schräge Rampen (wie bei DE 39 28 580 C2) in Eingriff gerät.

## Patentansprüche

1. Tankverschlußsystem für einen Kraftstoffbehälter eines Fahrzeuges, mit einem sich in die Nahe der Peripherie der Kraftfahrzeugkarosserie erstreckenden Einfüllstutzen (2;22), einem diesen dichtend verschließenden Tankdeckel (5;25), der mit einer um eine Drehachse (7;27) schwenkbaren Tankklappe (4;24) eine Einheit (3;23) bildet, welche mittels eines Antriebsmotors (M) zur Freigabe oder zum Verschließen des Einfüllstutzens (2;22) betätigbar ist, **dadurch gekennzeichnet**, daß eine die Einheit (3;23) bewegende Mechanik ein längs einer Führung (10;30) senkrecht zur Achse des Einfüllstutzens (2;22) bewegbares Betätigungselement (11;36) aufweist, das beim Verschließen des Einfüllstutzens (2) gleichzeitig einen Verriegelungsmechanismus (9,13;32;33) in Eingriff bringt, der in Schließposition auf einer der Drehachse (7;27) gegenüberliegenden Seite des Einfüllstutzens (2;22) angreift und dabei ein Verschlüßteil (5;25) des Tankdeckels fest gegen den Einfüllstutzen (2;22) drückt.

2. Tankverschlußsystem nach Anspruch 1, dadurch gekennzeichnet, daß die Einheit (3) an einer karosseriefesten Drehachse (7) schwenkbar gelagert ist.

3. Tankverschlußsystem nach Anspruch 1, dadurch gekennzeichnet, daß die Einheit (23) an einem bewegbaren Schlitten (26) schwenkbar gelagert ist.

4. Tankverschlußsystem nach Anspruch 3, dadurch gekennzeichnet, daß der Schlitten (26) in einer senkrecht zur Achse des Einfüllstutzens (2) liegenden Ebene bewegbar ist.

5. Tankverschlußsystem nach Anspruch 2, dadurch gekennzeichnet, daß die Einheit (3) in Form eines zweiseitigen Hebels ausgebildet ist und von einem karosseriefesten Drehpunkt (7) ausgehend an einem Ende einen Betätigungsbolzen (8) und am anderen Ende einen Verriegelungsbolzen (9) aufweist.

6. Tankverschlußsystem nach Anspruch 5, dadurch gekennzeichnet, daß die Mechanik ein im wesentlichen senkrecht zur Achse des Einfüllstutzens (2) verschiebbares Riegelgestänge (11, 11a, 11b) aufweist, das mit einem gabelförmigen Schlitz (14) mit dem Betätigungsbolzen (8) in Eingriff steht und ferner einen Fanghaken (13) aufweist, der bei geschlossener Einheit (3) den Verriegelungsbolzen (9) umgreift.

7. Tankverschlußsystem nach Anspruch 6, dadurch gekennzeichnet, daß der Fanghaken (13) eine bezüglich der Betätigungsrichtung des Riegelgestänges (11, 11a, 11b) leicht geneigte Rampe aufweist, mittels der beim Schließvorgang über den Riegelbolzen (9) ein wachsender Anpreßdruck der Einheit (3) auf den Einfüllstutzen (2) aufbringbar ist.

8. Tankverschlußsystem nach wenigstens einem der Ansprüche 1, 3 oder 4, dadurch gekennzeichnet, daß auf einer Seite des Einfüllstutzens (22) ein Schwenkhebel (28) vorgesehen ist, dessen eines Ende drehbar karosseriefest (bei 29) gelagert ist dessen anderes Ende drehbar (bei 31) am Tankklappen-Teil (24) der Einheit (23) gelagert ist und der eine Kulissenbahn (32) aufweist, in die ein an einem Betätigungsschlitten (36) schwenkbar gelagerter Gleitstein (33) eingreift.

9. Tankverschlußsystem nach Anspruch 8, dadurch gekennzeichnet, daß die Kulissenbahn (32) in ihrem vom Gleitstein (33) gegen Ende des Schließvorgangs durchlaufenden Bereich (32a) eine gegenüber der Betätigungsrichtung des Bewegungsschlittens (36) leicht geneigte Rampe zur Aufbringung eines Anpreßdruckes der Einheit (23) auf den Einfüllstutzen (22) aufweist.

10. Tankverschlußsystem nach wenigstens einem der vorhergehenden Ansprüche, dadurch gekennzeichnet, daß ein im geöffneten Zustand nahe des Einfüllstutzens (2; 22) plazierter Sensor (37) vorgesehen ist, der nach Detektieren der Beendigung eines Tankvorgangs einen Stellimpuls zum zeitverzögerten Schließen der Einheit (3; 23) an den Antriebsmotor abgibt.

## Claims

1. A tank closure system for a fuel tank of a vehicle, with a filler pipe (2; 22) extending into the vicinity of the periphery of the motor vehicle body, a tank cap (5; 25) which occludes the filler pipe in sealing-tight manner, and which forms one unit (3; 23) with a tank flap (4; 24) adapted to pivot about an axis (7; 27) and which can be actuated by means of a driving motor (M) in order to open or close the filler pipe (2; 22), characterised in that the mechanism propelling the unit (3; 23) comprises, adapted for movement along a guide (10; 30) at right-angles to the axis of the filler pipe (2; 22), an actuating element (11; 36) which, upon closure of the filler pipe (2), simultaneously brings an interlocking mechanism (9, 13; 32; 33) into engagement which, in the closed position, engages a side of the filler pipe (2; 22) opposite the axis of rotation (7; 27), so pressing a closure part (5; 25) of the tank cover securely against the filler pipe (2; 22).

2. A tank closure system according to claim 1, characterised in that the unit (3) is mounted to pivot on an axis of rotation (7) rigid with the body.

3. A tank closure system according to claim 1, characterised in that the unit (23) is mounted to pivot on a movable slider (26).

4. A tank closure system according to claim 3, characterised in that the slider (26) is adapted for movement in a plane at right-angles to the axis of the filler pipe (2).

5. A tank closure system according to claim 2, characterised in that the unit (3) is constructed in the form of a two-sided lever and comprises, starting from a pivot point (7) rigid with the body, an actuating bolt (8) at one end and an interlocking bolt (9) at the other end.

6. A tank closure system according to claim 1, characterised in that the mechanism comprises a bar linkage (11, 11a, 11b) adapted for displacement substantially at right-angles to the axis of the filler pipe (2) and has a forked slot (14) which engages the actuating bolt (8) and furthermore a catch hook (13) which engages around the interlocking bolt (9) when the unit (3) is closed.

7. A tank closure system according to claim 6, characterised in that the catch hook (13) comprises a ramp which is slightly inclined in relation to the actuating direction of the bar linkage (11a, 11b, 11c), by means of which, during the closing process, it is possible to apply via the locking bolt (9) an increasing pressure applied by the unit (3) to the filler pipe (2).

8. A tank closure system according to at least one of the claims 1, 3 or 4, characterised in that on one side of the filler pipe (2) there is a pivot lever (28) one end of which is rotatably mounted on the body (at 29) while its other end is mounted rotatably (at 31) on the tank flap part (24) of the unit (23) and which comprises a slideway (32) engaged by a sliding block (33) pivotally mounted on an actuating sliding member (36).

9. A tank closure system according to claim 8, characterised in that the slideway (32) has in its region (32a) which is traversed by the sliding block (33) towards the end of the closure process, a ramp which is slightly inclined in respect of the actuating direction of the sliding member (36) in order to apply the pressure of the unit (23) against the filler pipe (22).

10. A tank closure system according to at least one of the preceding claims, characterised in that a sensor (37) is provided which is placed close to the filler pipe (2; 22) when this is in its opened condition and which, after detecting termination of a tank filling process, delivers to the driving motor a positioning pulse for time-delayed closure of the unit (3; 33).

## Revendications

1. Dispositif de fermeture d'un réservoir de carburant d'un véhicule automobile avec une tubulure de remplissage (2, 22) s'étendant au voisinage de la périphérie de la carrosserie du véhicule, un bouchon de réservoir (5, 25) fermant de manière étanche ce dernier et gai forme un ensemble (3, 23) avec un volet de réservoir (4, 24) pivotant autour d'un axe de rotation (7, 27), ensemble gai peut être actionné au moyen d'un moteur de commande (M) pour libérer ou pour obturer la tubulure de remplissage (2, 22),
caractérisé en ce que
un mécanisme mettant en mouvement l'ensemble (3 ; 23) comprend un élément de commande (11, 36) déplaçable le long d'une glissière (10, 30) perpendiculairement à l'axe de la tubulure de remplissage (2, 22), élément gai lors de la fermeture de la tubulure de remplissage (2) met en prise en même temps un dispositif de verrouillage (9, 13, 32, 33), gai est appliqué dans la position de fermeture à un côté opposé à l'axe de rotation (7, 27) de la tubulure de remplissage (2, 22) et en outre appuyer une pièce de la fermeture (5, 25) du bouchon de réservoir fixement contre la tubulure de remplissage (2, 22).

2. Dispositif de fermeture de réservoir selon la revendication 1,
caractérisé en ce que
l'ensemble (3) est monté pivotable sur un axe de rotation (7) solidaire de la carrosserie.

3. Dispositif de fermeture de réservoir selon la revendication 1,
caractérisé en ce que
l'ensemble (23) est monté pivotant sur un glissoir mobile (26).

4. Dispositif de fermeture de réservoir selon la revendication 3,
caractérisé en ce que
le glissoir (26) est mobile dans un plan situé perpendiculairement à l'axe de la tubulure de remplissage (2).

5. Dispositif de fermeture de réservoir selon la revendication 2,
caractérisé en ce que
l'ensemble (3) est réalisé sous forme d'un levier à deux côtés et comprend en partant d'un centre de rotation (7) solidaire de la carrosserie, à une extrémité un axe d'entraînement (8) et à l'autre extrémité un axe de verrouillage (9).

6. Dispositif de fermeture de réservoir selon la revendication 5,
caractérisé en ce que
le mécanisme comporte essentiellement une tringlerie de verrouillage coulissante (11, 11a, 11b) perpendiculairement à l'axe de la tubulure de remplissage (2), qui est en prise dans une rainure (14) en forme de fourche par l'axe d'entraînement (8) et comprend en outre un crochet d'arrêt (13), qui lors de la fermeture de l'ensemble se saisit de l'axe de verrouillage (9), lorsque l'ensemble (3) est fermé.

7. Dispositif de fermeture de réservoir selon la revendication 6,
caractérisé en ce que
le crochet d'arrêt (13) comporte en ce qui concerne la direction de manoeuvre de la tringlerie de verrouillage (11, 11a, 11b) des rampes faiblement inclinées, au moyen desquelles lors de l'opération de fermeture sur l'axe de verrouillage (9) on peut appliquer une pression de serrage croissante de l'ensemble (3) sur la tubulure de remplissage (2).

8. Dispositif de fermeture de réservoir selon au moins une des revendications 1, 3 ou 4,
caractérisé en ce que
d'un côté de la tubulure de remplissage (22) est prévu un levier pivotant (28), dont une extrémité est montée solidaire de la carrosserie (en 29) mais en pouvant pivoter, dont l'autre extrémité est montée pivotante (en 31) sur la pièce de bouchon de réservoir (24) de l'ensemble (23) et qui comporte une glissière à coulisse (32), dans laquelle engrène une tête coulissante (33) montée pivotante sur un curseur de commande (36).

9. Dispositif de fermeture de réservoir selon la revendication 8,
caractérisé en ce que
la glissière à coulisse (32) comporte dans sa zone (32a) parcourue par la tête coulissante (33) vers la fin du processus de fermeture une rampe inclinée légèrement pour l'application d'une pression de serrage de l'ensemble (23) sur la tubulure de remplissage (22).

10. Dispositif de fermeture de réservoir selon au moins une des revendications précédentes,
caractérisé en ce qu'est
prévu un capteur (37) placé près de la tubulure de remplissage (2, 22), gai après détection de la fin d'un processus de remplissage délivre au moteur de commande une impulsion de réglage pour la fermeture retardée dans le temps de l'ensemble (3, 23).
